# EUROPÄISCHE PATENTSCHRIFT

(11) **EP 3 680 024 B1**
(45) Veröffentlichungstag und Bekanntmachung des Hinweises auf die Patenterteilung: **14.12.2022**
(21) Anmeldenummer: 20160246.3
(22) Anmeldetag: 30.06.2015
(51) Int. Cl.: B05C 5/02, B05C 1/14, B29C 35/08, B29C 59/04, B29C 59/02

(54) **MODUL ZUM AUFTRAGEN EINES VISKOSEN MEDIUMS AUF EINE OBERFLÄCHE UND VERFAHREN ZUM HERSTELLEN DES MODULS**
MODULE FOR APPLYING A VISCOUS MEDIUM TO A SURFACE AND METHOD FOR PRODUCING THE MODULE
MODULE D'APPLICATION D'UN MILIEU VISQUEUX À UNE SURFACE ET PROCÉDÉ DE FABRICATION DE MODULE

(30) Priorität: 03.07.2014 DE 102014212940
(43) Veröffentlichungstag der Anmeldung: 15.07.2020
(62) Teilanmeldung aus: 15733705.6
(73) Patentinhaber: Fraunhofer-Gesellschaft zur Förderung der angewandten Forschung e.V., 80686 München (DE)
(72) Erfinder: KORDY, Heinrich, 28359 Bremen (DE); POSPIECH, Lars, 28359 Bremen (DE); PESCHKA, Manfred, 28359 Bremen (DE)
(74) Vertreter: Pfenning, Meinig & Partner mbB

(56) Entgegenhaltungen:
- EP-A1- 2 711 088
- EP-A2- 0 096 832
- WO-A1-2013/083682
- DE-C- 816 104
- US-A- 5 700 325

## Beschreibung

Die Erfindung betrifft ein Modul, ein System und ein Verfahren zum Auftragen eines viskosen Mediums auf eine Oberfläche sowie ein Verfahren zum Herstellen des Moduls.

Ein Modul zum Auftragen eines viskosen Mediums auf eine Oberfläche eines Werkstücks wird beispielsweise in der Veröffentlichung WO 2009/144295 A1 beschrieben. Das dort beschriebene Modul ist als eine Breitschlitzdüse ausgestaltet, die ein Reservoir mit einem Schlitz und einem Schließmechanismus aufweist. Mittels des Schließmechanismus lässt sich der Schlitz öffnen und verschließen, um so einen Massenstrom des viskosen Mediums durch den Schlitz präzise ein- und auszuschalten. Aufgrund des Schließmechanismus sind derartige Breitschlitzdüsen jedoch relativ teuer und erfordern nach dem Gebrauch eine aufwendige Reinigung.

In der Veröffentlichung US 5 700 325 A wird eine Beschichtungsvorrichtung mit einer Düse beschrieben, die konfiguriert wird, indem ein vorderer Block und mindestens ein hinterer Block kombiniert werden. Ein vorderer Block umfasst einen Abschnitt, der in Bezug auf den hinteren Block in Richtung des Basiselements projiziert wird, und eine Oberseite des projizierten Abschnitts wird zu einer gekrümmten Fläche mit einem vorbestimmten Krümmungsradius verarbeitet. Eine Oberseite des Rückblocks, die dem Grundmaterial gegenüberliegt, wird zu einer flachen Fläche verarbeitet, und mehrere Entladungsöffnungen sind darin vorgesehen, um ein Beschichtungsmaterial durch dieses zu entladen. Das Basismaterial bewegt sich zuerst entlang der gekrümmten Fläche des Frontblocks. Das Basiselement bewegt sich dann im Wesentlichen parallel zur flachen Seite über die flache Fläche des hinteren Blocks, während das Beschichtungsmaterial durch die Entladungsöffnungen abgegeben wird, wodurch ein streifenförmiger Beschichtungsfilm auf der Oberfläche des Grundmaterials gebildet wird. Eine Linienbreite und eine Dicke des so gebildeten streifenförmigen Beschichtungsfilms werden so gesteuert, dass sie bei den vorgegebenen Werten bleiben und Schwankungen davon eliminiert werden.

In der Veröffentlichung EP 2 711 088 A1 wird eine Filmbeschichtungsdüse beschrieben, die Folgendes aufweist: Abzweigblöcke mit einer verzweigten Kanalstruktur, eine Düsenspitze und einen Rohrabschnitt, der eine Vielzahl von Röhren mit Röhreneinlassöffnungen, die mit der verzweigten Kanalstruktur in Verbindung stehen, und Röhrenauslassöffnungen, die mit der Auswurföffnung des Spitzenelements in Verbindung stehen, aufweist. Die Abzweigblöcke weisen mehrere Stufen von Abzweigabschnitten aufweisen, von denen jeder eine Kammer zum Abzweigen eines Strömungskanals bereitstellt, der mit einer Einströmöffnung in Verbindung steht. Die Strömungskanäle, die durch die Abzweigabschnitte in der gleichen Stufe verzweigt sind, weisen gleiche Längen bis hin zu deren Ausströmöffnungen auf.

Die Veröffentlichung DE 32 223 35 A1 beschreibt ein Queranleimwerk für sehr schnell laufende Bahnen, insbesondere für die Verklebung mehrerer Bahnen in Rotationsdruckpressen, bei dem der Klebstoff von einem Vorratsbehälter dem Innenraum eines rotierenden Auftragezylinders, an dessen Umfang die Bahn tangiert, zugeführt und durch in der Zylinderwandung befindliche Austrittsöffnungen auf die Bahn aufgetragen wird. Die Bahn umschlingt einen Teilbereich des Mantels des Auftragezylinders, dessen Umfang dem gewünschten Abstand der Querleimungen oder einem ganzen Vielfachen dieses Abstandes entspricht. Die Kapillaröffnungen sind als längs von Mantellinien des Auftragezylinders sich erstreckende Bohrungsreihen in Ein- oder Mehrzahl ausgebildet. An die Innenseite der einzelnen Austrittsöffnungen erstreckt sich ein Klebstoffzuführkanal, der mit einem ortsfesten axialen Klebstoffanschluss des Auftragezylinders in Verbindung steht.

Die Veröffentlichung WO 2013/083682 A1 offenbart ein Werkzeug zum Erzeugen einer Schicht mit mikrostrukturierter Außenfläche auf einer Substratoberfläche. Das Werkzeug weist eine elastische Matrizenbahn auf mit einem Negativ der zu erzeugenden Mikrostruktur, eine über eine Oberfläche verfahrbare elastische Andruckwalze und mindestens ein Führungselement zum Führen der elastischen Matrizenbahn relativ zu der Andruckwalze. Die Andruckwalze und die Matrizenbahn sind derart angeordnet, dass beim Verfahren der Andruckwalze über die Substratoberfläche das Negativ auf der Matrizenbahn zu der Substratoberfläche gerichtet ist.

Es ist die Aufgabe der vorliegenden Erfindung, ein Modul zum Auftragen eines viskosen Mediums auf eine Oberfläche vorzuschlagen, das sich möglichst einfach herstellen und handhaben lässt. Ferner soll auch ein möglichst einfaches und kostengünstiges Herstellungsverfahren für ein solches Modul vorgeschlagen werden.

Diese Aufgabe wird gelöst durch ein Modul gemäß dem Hauptanspruch und durch ein Herstellungsverfahren für ein solches Modul gemäß dem Nebenanspruch. Bevorzugte Ausführungsformen und Weiterentwicklungen ergeben sich mit den übrigen Ansprüchen.

Demnach eignet sich das hier vorgeschlagene Modul zum Auftragen eines viskosen Mediums auf eine Oberfläche. Bei der hier und im Folgenden genannten Oberfläche kann es sich beispielsweise um eine Oberfläche eines beliebigen Substrats handeln, auf die das viskose Medium aufgetragen werden kann, wie beispielsweise um die Oberfläche eines Werkstücks, eines Bauteils oder einer Matrize. Bei dem hier und im Folgenden genannten viskosen Medium kann es sich beispielsweise um einen Klebstoff, eine Farbe oder einen Lack, wie etwa einen aushärtbaren Lack zur Herstellung einer Mikrostruktur, handeln. Weitere Beispiele und Angaben bezüglich des viskosen Mediums und der Oberfläche folgen weiter unten.

Das Modul weist ein Reservoir auf, das mit dem viskosen Medium gespeist (befüllt) werden kann, beispielsweise über hierfür ausgestaltete Medienanschlüsse des Moduls. Das Reservoir kann beispielsweise ein Hohlraum in dem Modul sein. Damit beim Auftragen des viskosen Mediums ein möglichst gleichmäßiger Überdruck (gemessen gegenüber dem Umgebungsdruck, typischerweise also gegenüber dem Atmosphärendruck) im Reservoir hergestellt werden kann, ist das Reservoir vorzugsweise zylinderförmig ausgestaltet. Ein gleichmäßiger Überdruck begünstigt einen gleichmäßigen Medienaustrag aus dem Reservoir. Aus dem gleichen Grund kann das Modul zwei oder mehr voneinander gleichmäßig beabstandete Medienanschlüsse zum Speisen des Reservoirs aufweisen, welche beispielsweise an entgegengesetzten Enden des Reservoirs angeordnet sind. Der für das Auftragen des Mediums erforderliche Überdruck im Reservoir wird, wie weiter unten näher erläutert wird, typischerweise ausschließlich durch das Fördern des aufzutragenden Mediums in das Reservoir hergestellt und gesteuert bzw. geregelt. Außerdem wird der Medienaustrag durch die Düsenkanäle typischerweise ausschließlich durch den Überdruck hervorgerufen. Fliehkräfte durch ein Rotieren des Moduls um dessen Längsachse spielen dahingegen keine Rolle. Typischerweise erfolgt keine Rotation des Moduls um dessen Längsachse während des Medienaustrags aus dem Reservoir, so dass Fliehkräfte den Medienaustrag also weder bewirken noch wesentlich beeinflussen. Typischerweise ist das Modul während des Medienaustrags mittels einer Halterung bezüglich seiner Längsachse drehfest fixiert.

Die Außenfläche (also die äußere Oberfläche) des Moduls umfasst einen Auslassbereich für das viskose Medium, der sich typischerweise entlang einer gesamten Längsausdehnung des Reservoirs, beispielsweise entlang einer Längsachse des Reservoirs, erstreckt. Das Modul weist mindestens einen Düsenkanal, also entweder genau einen Düsenkanal oder mehrere Düsenkanäle, auf. Im Folgenden wird der Kürze und Übersichtlichkeit halber manchmal anstelle von "der mindestens eine Düsenkanal" einfach "der Düsenkanal" gesagt, wobei sich das Gesagte aber weiterhin auf "den mindestens einen Düsenkanal" bezieht, also auf alle Düsenkanäle im Fall mehrerer Düsenkanäle. Wird eine bestimmte Eigenschaft (wie etwa kleinster Durchmesser, größter Durchmesser, Querschnittsfläche, Kanallänge, Kanalverlauf, Durchlasswiderstand etc.) des mindestens einen Düsenkanals beschreiben, so ist im Fall mehrerer Düsenkanäle die betreffende Eigenschaft eines jeden Düsenkanals gemeint.

Der mindestsens eine Düsenkanal verbindet das Reservoir mit dem Auslassbereich fluidisch, so dass das viskose Medium durch den mindestens einen Düsenkanal hindurch aus dem Reservoir bis zum Auslassbereich ausströmen kann. Ausgehend von dem Auslassbereich kann das viskose Medium an die jeweilige Oberfläche (beispielsweise des Substrats, des Bauteils oder der Matrize, siehe unten) abgegeben werden. Typischerweise ist der Auslassbereich in Richtung der Längsachse bzw. der Längsausdehnung des Reservoirs nicht gekrümmt sondern gerade oder eben ausgestaltet, um so dass viskose Medium besonders gleichmäßig auf eine ebene Oberfläche auftragen zu können.

Der vorliegenden Erfindung liegt die Erkenntnis zugrunde, dass es mit Hilfe des mindestens einen Düsenkanals möglich ist, einen Massenstrom des viskosen Mediums aus dem Reservoir auf einfache und in den meisten Fällen ausreichend präzise Weise ein- und auszuschalten. Der mindestens eine Düsenkanal weist einen Durchlasswiderstand für das viskose Medium auf, der dem Massenstrom des viskosen Mediums durch den mindestens einen Düsenkanal entgegensteht und diesen, je nach Größe des Überdrucks des viskosen Mediums innerhalb des Reservoirs, abbremsen oder ganz zum erliegen bringen kann. Der Durchlasswiderstand ist insbesondere auf die Reibung des viskosen Mediums an den Kanalinnenwänden des mindestens einen Düsenkanals wie auch auf die innere Reibung des Mediums innerhalb des mindestens einen Düsenkanals während des Ausströmens des viskosen Mediums zurückzuführen. Diese Reibungseffekte bewirken somit einen relativ hohen Druckabfall innerhalb des mindestens einen Düsenkanals.

Um daher einen Massenstrom des viskosen Mediums durch den mindestens einen Düsenkanal zu erzeugen, muss das viskose Medium im Innern des Reservoirs mit einem Überdruck beaufschlagt werden, der ausreichend hoch ist, um den Durchlasswiderstand des mindestens einen Düsenkanals zu überwinden. Wird also beispielsweise die Förderung des viskosen Mediums in das Reservoir beendet, fällt der Überdruck im Reservoir relativ schnell soweit ab, dass der Überdruck nicht mehr zum Aufrechterhalten des Massenstroms ausreicht. Daher kann durch ein ausreichendes Absenken des Überdrucks innerhalb der Reservoirs, beispielsweise durch ein Beenden der Förderung des viskosen Mediums in das Reservoir, der Massenstrom des viskosen Mediums durch den mindestens einen Düsenkanal (und somit auch das Auftragen des viskosen Mediums auf die Oberfläche) sehr abrupt und präzise beendet werden. Ein unerwünschtes Nachfließen nach der Druckabsenkung wird durch den hohen Durchlasswiderstand des mindestens einen Düsenkanals stark unterdrückt und weitgehend unterbunden. Ein unerwünschtes Nachfließen kann im Fall konventioneller Breitschlitzdüsen beispielsweise durch einen im Reservoir weiterhin herrschenden Restdruck und/oder durch die Schwerkraft hervorgerufen werden (falls der Schlitz des Reservoirs beispielsweise nach unten orientiert ist).

Mit Hilfe des mindestens einen Düsenkanals kann der Massenstrom auch sehr abrupt und präzise begonnen werden. Bei einem zu geringem Überdruck wird zunächst kein Massenstrom erzeugt. Erst wenn, beispielsweise durch eine entsprechende Förderung des viskosen Mediums in das Reservoir, der für den Massenstrom erforderliche (relativ hohe) Überdruck erzeugt worden ist, wird das viskose Medium durch den mindestens einen Düsenkanal aus dem Reservoir ausgetragen.

Vorteilhafterweise weist das Modul keinen eigenen Schließmechanismus und keine beweglichen Teile zum Verschließen oder Versperren des mindestens einen Düsenkanals auf, wie etwa einen (automatischen oder manuell bedienbaren) Schließmechanismus, und kann somit besonders einfach und kostengünstig hergestellt werden. Als einfaches und kostengünstiges Einwegbauteil kann das Modul nach dem Gebrauch entsorgt und durch ein entsprechendes bzw. baugleiches Modul ersetzt werden. Dadurch entfällt eine aufwendige Reinigung des Moduls, welche oftmals umweltbelastend ist und die, etwa bei der Verwendung organischer Lösungsmitteln zur Entfernung von Lackresten, zudem auch aufwendige Schutzmaßnahmen gegen mögliche Gesundheitsrisiken für das Personal erforderlich machen kann. Das Modul kann aus einem Kunststoff gefertigt sein, beispielsweise einem Kunststoff, der sich für die Herstellung des Moduls in einem Spritzgussverfahren eignet. Das Modul kann also beispielsweise als ein Spritzgussteil ausgeführt sein. Geeignet sind hier als Kunststoff beispielsweise die Gruppe der Polyolefine wie Polyethylen und Polypropylen sowie auch Polyamid.

Erfindungsgemäß besteht das Modul aus mehreren Modulsegmenten bestehen, die beispielsweise axial zu dem Modul zusammengesetzt werden. Diese Modulsegmente umfassen zwei gleichartige Endsegmente oder Endkappen, welche das Reservoir seitlich abschließen und die gegebenenfalls jeweils einen der genannten Medienanschlüsse aufweisen können. Außerdem umfassen die Modulsegmente ein oder mehrere Zwischensegmente, die zwischen den Endsegmenten oder Endkappen angeordnet sind, das Reservoir seitlich umgrenzen und den mindestens einen Düsenkanal aufweisen. Das Zwischensegment bzw. die Zwischensegmente sind rohrförmig ausgebildet und bilden jeweils einen axialen Abschnitt des Moduls (bezüglich der Längsachse des Moduls) aus. Die Modulsegmente können beispielsweise mittels entsprechend ausgestalteter Verbindungselemente des Moduls miteinander verbunden sein, beispielsweise mittels in axialer Richtung wirkender Klemm- oder Spannelemente.

Der erzielbare Druckabfall in dem mindestens einen Düsenkanal hängt besonders stark von einem kleinsten Durchmesser des mindestens einen Düsenkanals ab. Wie bereits oben erwähnt, weist im Fall mehrerer Düsenkanäle jeder der Düsenkanäle einen eigenen kleinsten Durchmesser auf. Wird von dem kleinsten Durchmesser des mindestens einen Düsenkanals gesprochen, ist der kleinste Durchmesser eines jeden Düsenkanals gemeint. Entsprechendes gilt insbesondere auch für den weiter unten genannten größten Durchmesser und die Kanallänge des mindestens einen Düsenkanals. Typischerweise beträgt der kleinste Durchmesser des mindestens einen Düsenkanals jeweils 0,8 mm oder weniger, beispielsweise können die kleinsten Durchmesser auch weniger als 0,6 mm bis 0,1 mm betragen. Außerdem kann vorgesehen sein, dass der mindestens eine Düsenkanal einen größten Durchmesser aufweist, wobei der größte Durchmesser des mindestens einen Düsenkanals kleiner als 3 mm, vorzugsweise kleiner als 2 mm ist. In dem Spezialfall nur eines einzigen Düsenkanals erstreckt sich dieses vorzugsweise entlang der gesamten Längsausdehnung des Reservoirs, ist also als enger, langer Schlitz ausgestaltet. Der größte Durchmesser des Düsenkanals entspricht dann etwa der Gesamtlänge des Reservoirs.

Dabei kann zur Definition des kleinsten Durchmessers eines Düsenkanals eine Querschnittsfläche des Düsenkanals herangezogen werden. Die herangezogene Querschnittsfläche ist vorzugsweise senkrecht zu dem Verlauf des Düsenkanals von dem Reservoir bis zum Auslassbereich, also senkrecht zu einer Längsausdehnung oder einer Längsachse des Düsenkanals, orientiert. Allgemein kann der kleinste Durchmesser als der Durchmesser des größtmöglichen Kreises definiert sein, der vollständig innerhalb der betrachteten Querschnittsfläche des Düsenkanals liegt (d.h. als der Durchmesser des größtmöglichen einbeschriebenen Kreises der Querschnittsfläche). Entsprechend kann ein größter Durchmesser eines Düsenkanals allgemein als der Durchmesser des kleinestmöglichen Kreises definiert sein, der die Querschnittsfläche vollständig enthält (d.h. als der Durchmesser des kleinstmöglichen umbeschriebenen Kreises der Querschnittsfläche). Im Spezialfall einer kreisrunden Querschnittsfläche ist der kleinste Durchmesser gleich dem größten Durchmesser und entspricht dem üblichen Durchmesser der Querschnittsfläche. Im Fall anders geformter, nicht-kreisrunder Querschnittsflächen ist der kleinste Durchmesser kleiner als der größte Durchmesser des jeweiligen Düsenkanals.

Jeder des mindestens einen Düsenkanals verläuft von einer Einlassöffnung des jeweiligen Düsenkanals, mit der der Düsenkanal im Reservoir mündet, bis zu einer Auslassöffnung des jeweiligen Düsenkanals, mit der der Düsenkanal im Auslassbereich auf der Außenfläche des Moduls mündet. Der mindestens eine Düsenkanal weist eine von dem Reservoir bis zum Auslassbereich gemessene Kanallänge auf, welche als Abstand zwischen der jeweiligen Einlassöffnung und Auslassöffnung definiert werden kann. Typischerweise beträgt die Kanallänge 0,8 mm oder mehr, beispielsweise 1,6 mm oder mehr.

Es ist außerdem möglich, dass der mindestens eine Düsenkanal eine Querschnittsfläche aufweist, die sich entlang des Kanalverlaufs von dem Reservoir zum Auslassbereich ändert und sich entlang dieses Verlaufs beispielweise verengt oder aufweitet. Beispielsweise kann der mindestens eine Düsenkanal stufenförmig oder konisch ausgestaltet sein. Bei derart veränderlichen Querschnittsflächen wird der kleinste (bzw. größte) Durchmesser eines Düsenkanals typischerweise durch den kleinsten Wert des kleinsten Durchmessers (bzw. durch den größten Wert des größten Durchmesser) entlang des gesamten Verlaufs des jeweiligen Düsenkanals definiert.

Es ist ferner erforderlich, dass das Modul ausreichend dimensionsstabil ist, um dem Überdruck, mit dem das viskose Medium im Reservoir beaufschlagt wird, standhalten zu können. Typischerweise wird, je nach Viskosität des viskosen Mediums und der Größe des Druckabfalls in dem mindestens einen Düsenkanal, ein Überdruck von mehr als 1,5 Bar angewendet, typischerweise liegt der Überdruck in einem Bereich zwischen 1,5 Bar und 30 bar.

Das Reservoir hat typischerweise eine Länge (gemessen entlang der oben genannten Längsausdehnung oder Längsachse) von mehr als 10 cm oder von mehr als 50 cm. Typischerweise beträgt die Länge aber nicht größer als 100 cm oder nicht mehr als 150 cm. Vorzugsweise sind im Fall mehrerer Düsenkanäle die Düsenkanäle entlang der gesamten Längsausdehnung des Reservoirs angeordnet (so dass sich der Auslassbereich entlang der gesamten der Länge des Reservoirs erstreckt). Typischerweise liegen die (in Richtung der Längsachse des Reservoirs gemessenen) Abstände benachbarter Düsenöffnungen in einem Bereich zwischen 0,2 mm und 3 mm. Die Anzahl der Düsenöffnungen pro Längeneinheit beträgt z. B. mindestens 100/m. Je größer die Anzahl der Düsenkanäle ist, umso größer ist der gesamte Massenstrom durch den mindestens einen Düsenkanal bei gegebenem Überdruck. Werden die Düsenkanäle sehr eng und mit großer Kanallänge ausgestaltet, um einen möglichst hohen Druckabfall und ein möglichst gut kontrollierbares Ein- und Ausschalten des Massenstroms zu ermöglichen, kann durch eine vergrößerte Anzahl der Düsenkanäle ein ausreichender Gesamtdurchlass bei gegebenem Überdruck erzielt werden.

Um eine hohe Anzahl von Düsenkanälen zu ermöglichen, können die Düsenkanäle in dem Auslassbereich beispielsweise reihenartig, also in mindestens einer Reihe angeordnet sind, wobei die mindestens eine Reihe der Düsenkanäle entlang der Längsausdehnung (bzw. der Längsachse) des Reservoirs verläuft. Beispielsweise können die Düsenkanäle in zwei oder mehr Reihen angeordnet werden, wobei diese Reihen vorzugsweise parallel zueinander und parallel zur Längsausdehnung oder Längsachse des Reservoirs verlaufen. Um eine möglichst gleichmäßige und einfach herstellbare Anordnung der Düsenkanäle zu erhalten, ist es insbesondere möglich, dass die Düsenkanäle in benachbarten Reihen in Richtung der Längsausdehnung des Reservoirs versetzt zueinander angeordnet sind. Auf diese Weise bilden (gedachte) Verbindungslinien benachbarter Düsenkanäle ein Zickzack-Muster aus.

Das Modul kann eine Rakelkante aufweisen, welche vorzugsweise entlang des Auslassbereichs verläuft. Die Rakelkante ist also typischerweise auf der Außenfläche des Moduls angeordnet und befindet sich also auf der Außenseite des Moduls. Beispielsweise kann die Rakelkante durch einen Teilbereich der Außenfläche des Moduls gebildet sein. Dieser Teilbereich kann beispielsweise stufenförmig oder kantenförmige ausgeformt sein. Der Teilbereich kann an den Auslassbereich angrenzen. Beispielsweise kann ein Abstand zwischen den Düsenkanälen und der Rakelkante zwischen 0 mm und 2 mm liegen. Ferner kann die Rakelkante scharfkantig oder abgerundet ausgeformt sein. Falls die Düsenkanäle reihenartig angeordnet sind, verläuft die Rakelkante typischerweise entlang oder parallel zur mindestens einen Reihe der Düsenkanäle. Mittels der Rakelkante ist es möglich, das auf die Oberfläche aufgetragene viskose Medium auf der Oberfläche zu verteilen, beispielsweise indem während des Auftragens das Modul und die Oberfläche auf geeignete Weise relativ zueinander bewegt werden. Beispielsweise kann mittels der Rakelkante eine besonders gleichmäßige Schichtdicke des viskosen Mediums auf der Oberfläche erzielt werden. Es ist außerdem möglich, mit der Rakelkante das viskose Medium besonders gut in Vertiefungen der Oberfläche einzubringen, sofern vorhanden, beispielsweise im Fall, dass die Oberfläche strukturiert ist, wie im Fall von Matrizen, deren Oberfläche eine Negativform einer zur erzeugenden Oberflächenstruktur aufweisen, wie weiter unten näher beschrieben wird.

Das hier vorgeschlagene Verfahren eignet sich zum Auftragen eines viskosen Mediums auf eine Oberfläche unter Verwendung eines Moduls hier vorgeschlagener Art. Das Verfahren zeichnet sich dadurch aus,
- dass das Austragen des viskosen Mediums durch den mindestens einen Düsenkanal aus dem Reservoir des Moduls begonnen und aufrechterhalten wird, indem der Überdruck des viskosen Mediums in dem Reservoir mindestens soweit vergrößert wird, bis der Durchlasswiderstand des mindestens einen Düsenkanals für das viskose Medium überwunden wird (und das viskose Medium durch den mindestens einen Düsenkanal hindurch aus dem Reservoir ausfließt), und
- dass das Austragen des Mediums gestoppt oder unterbrochen wird ohne den mindestens einen Düsenkanal durch Schließelemente oder dergleichen zu versperren, indem der Überdruck des viskosen Mediums innerhalb des Reservoirs mindestens soweit abgesenkt wird, bis der Durchlasswiderstand des mindestens einen Düsenkanals für das viskose Medium nicht mehr überwunden wird (und das Hindurchfließen des viskosen Mediums durch den mindestens einen Düsenkanal durch den Druckverlust des viskosen Mediums in dem mindestens einen Düsenkanal gestoppt wird).

Typischerweise wird mit dem Austragen des Mediums aus dem Reservoir auch, praktisch gleichzeitig, das Auftragen des viskosen Mediums auf die Oberfläche begonnen und aufrechterhalten bzw. gestoppt. Es wird bei dem Verfahren der mindestens eine Düsenkanal also nicht geöffnet oder verschlossen, um das Auftragen des viskosen Mediums zu beginnen bzw. zu beenden. Vielmehr wird der mindestens eine Düsenkanal während des gesamten Verfahrens in einem geöffneten Zustand gehalten. Das Verfahren wird also durchgeführt, ohne den Massenstroms des viskosen Mediums durch den mindestens einen Düsenkanal mittels beweglicher Schließelemente an dem mindestens einen Düsenkanal zu beeinflussen. Nach Durchführung des Verfahrens entfällt daher auch die Reinigung derartiger Schließelemente.

Als viskoses Medium kann beispielsweise ein Klebstoff, eine Farbe oder ein Lack, insbesondere ein aushärtbarer Lack zur Herstellung einer mikrostrukturierten Oberfläche, beispielsweise ein Dual-Cure-Lack, verwendet werden. Das verwendete viskose Medium weist typischerweise eine (dynamische) Viskosität von 0,5 Pa·s oder mehr auf. Das viskose Medium weist also eine relativ geringe Fließfähigkeit auf und kann beispielsweise als eine Paste vorliegen. In der Regel beträgt die Viskosität aber nicht mehr als 150 Pa·s.

Das vorgeschlagene Verfahren eignet sich insbesondere dazu, eine mikrostrukturierte Oberfläche herzustellen, beispielsweise auf die in der Patentschrift DE 103 46 124 B4 und in der zugehörigen Nachanmeldung WO 2005/030472 A1 beschriebene Weise. Somit kann das hier vorgeschlagene Modul auch Teil des in diesen Veröffentlichungen beschriebenen Werkzeugs sein. Alle in diesen Veröffentlichungen gemachten Angaben, insbesondere zur Mikrostruktur und mikrostrukturierten Oberfläche, zu den Objekten, auf denen derartige mikrostrukturierte Oberflächen hergestellt werden, zum viskosen Medium (in den genannten Veröffentlichungen als (aushärtbares) Material bezeichnet), zu dem dort beschriebenen Werkzeug, insbesondere zur dort beschriebenen Matrize, der Andruckwalze, der Vorrichtung zum Beschleunigen des Aushärtens, sowie zu den Verfahrensschritten des dort beschriebenen Verfahrens, seien somit in die vorliegende Anmeldung mit aufgenommen und können beispielsweise auf die nachfolgend beschriebenen Ausführungsbeispiele für das hier vorgeschlagene Verfahren entsprechend übertragen werden.

Entsprechend der Terminologie der letztgenannten Veröffentlichungen ist unter einer mikrostrukturierten Oberfläche eine Oberfläche zu verstehen, die eine Mikrostruktur, das heißt eine Oberflächentopographie, aufweist, die im wesentlichen Strukturen im Bereich von 100 um bis 0,5 µm, bevorzugt 50 um bis 0,5 µm, Abstand zueinander und Tiefe umfasst. Bei der Mikrostruktur kann es sich beispielsweise um eine sogenannte Riblet-Struktur handeln, welche beispielsweise rippenförmige bzw. stegförmige Erhöhungen umfassen kann. Riblet-Strukturen können eine Verminderung des Reibungswiderstands auf turbulent überströmten Oberflächen bewirken, und werden somit beispielsweise auf Oberflächen von Flugzeugen, Schienenfahrzeugen, Schiffen, insbesondere die Oberflächen deren Rümpfe, und/oder Windenergieanlagen, insbesondere die Oberflächen deren Rotorblätter, hergestellt.

Die Mikrostruktur kann durch Abformen (z.B. Prägen) erfolgen, beispielsweise mittels einer Matrize, wie unten beschrieben wird. Dabei ist der Fehler der Abformung (Abweichung von der Sollform) typischerweise kleiner als 5 µm, bevorzugt kleiner 1 µm. In einer Variante des hier vorgeschlagenen Verfahrens wird auf einer Oberfläche eines Bauteils eine Mikrostruktur durch Abformen einer Matrize erzeugt, welche ein Negativ (also eine Negativform) der zu erzeugenden Mikrostruktur aufweist. Die Matrize ist vorzugsweise formflexibel, um sich an Krümmungen der jeweiligen Bauteiloberfläche anpassen zu können. Das viskose Medium kann mittels des Moduls auf das Negativ der Matrize und mittels der Matrize anschließend auf die Bauteiloberfläche aufgetragen werden. Es ist alternativ auch möglich, das viskose Medium direkt auf die Bauteiloberfläche aufzutragen und das aufgetragene viskose Medium anschließend mit der Matrize in Kontakt zu bringen. In beiden Fällen wird auf der Bauteiloberfläche eine Schicht des viskosen Mediums erzeugt und die Matrize mit dem Negativ auf die Bauteiloberfläche aufgedrückt, beispielsweise mittels der oben genannten Andruckwalze, so dass mittels des Negativs der Matrize die zu erzeugende Mikrostruktur auf die Schicht durch Abformen übertragen wird. Hierbei befindet sich also die Schicht des viskosen Mediums zwischen der Bauteiloberfläche und dem Negativ der Matrize. Beispielsweise kann die Walze über die Oberfläche so abgerollt werden, dass die Matrize in einer rollenden Bewegung zwischen Walze und Oberfläche gelangt, so dass das Negativ der Matrize der Oberfläche zugewandt ist. Die Matrize kann als Band oder Streifen ausgestaltet sein, insbesondere als ein Endlosband.

Typischerweise wird die aus dem viskosen Material gebildete Schicht, noch während sie sich zwischen der Matrize und der Bauteiloberfläche befindet, also *in situ,* vollständig oder zumindest teilweise ausgehärtet, um die Schicht und die auf ihr hergestellte Mikrostruktur zu stabilisieren. Um die Aushärtung zu beschleunigen, kann die oben bereits genannte Vorrichtung zum Beschleunigen des Aushärtens verwendet werden, welche zum Beispiel eine (UV-) Strahlungsquelle oder eine Wärmequelle aufweisen kann. Nach einer ausreichenden Aushärtung des viskosen Materials in der Schicht kann die Matrize von der Bauteiloberfläche abgenommen werden, ohne dass die Mikrostruktur in der Schicht des (ursprünglich viskosen) Mediums verläuft oder sich die Schicht von der Bauteiloberfläche ablöst. Dieses Abnehmen kann beispielsweise durch Verfahren (Abrollen) der Andruckwalze und/oder einer weiteren Walze auf der Bauteiloberfläche erfolgen (Details können wiederum der DE 103 46 124 B4 und der WO 2005/030472 A1 entnommen werden).

Auf diese Weise kann die Bauteiloberfläche entlang einer praktisch beliebig langen Strecke kontinuierlich oder diskontinuierlich mit der Mikrostruktur versehen werden, wobei zum Beenden der Strecke oder zum Erzeugen einer Unterbrechung der Mikrostruktur im Verlauf der Strecke der Materialaustrag aus dem Reservoir einfach und präzise durch ein Absenken des Überdrucks im Reservoir beendet oder unterbrochen werden kann, wie oben beschrieben worden ist. Zu Beginn einer neuen Strecke oder zum Fortsetzen der Mikrostruktur entlang einer bereits begonnenen Strecke kann der zum Austragen erforderliche Überdruck wieder erzeugt werden, um den Materialaustrag fortzusetzen. Nachdem die Bauteiloberfläche fertig beschichtet worden ist oder wenn eine längere Unterbrechung des Verfahrens erfolgen soll, kann das Modul durch ein weiteres, noch unbenutztes Modul hier vorgeschlagener Art ersetzt werden.

Das hier vorgeschlagene System eignet sich zum Auftragen eines viskosen Mediums auf eine Oberfläche und insbesondere zur Durchführung des hier vorgeschlagenen Verfahrens. Alle im Zusammenhang mit dem Verfahren beschriebenen Merkmale lassen sich daher entsprechend auch auf das vorgeschlagene System übertragen. Das System umfasst ein Modul hier vorgeschlagener Art sowie eine mit dem Modul fluidisch verbindbare Fördervorrichtung, die dazu eingerichtet ist, das viskose Medium in das Reservoir des Moduls zu fördern und dort mit dem bereits oben beschriebenen Überdruck zu beaufschlagen. Der mittels der Fördervorrichtung erzeugbare Überdruck des viskosen Mediums in dem Reservoir ist also so groß ist, dass das mit dem Überdruck beaufschlagte viskose Medium durch den mindestens einen Düsenkanal hindurch aus dem Reservoir ausströmt. Das System weist daher in der Regel keinen an dem mindestens einen Düsenkanal angeordneten (automatischen oder manuell bedienbaren) Schließmechanismus auf, welcher dazu eingerichtet wäre, den mindestens einen Düsenkanal zu öffnen und zu verschließen.

Die Fördervorrichtung kann steuerbar sein. Das System kann ferner eine Steuereinheit zum Steuern der Fördervorrichtung umfassen, wobei die Steuereinheit zum Übertragen von Steuersignalen mit der Fördervorrichtung verbunden und eingerichtet ist,
- zum Starten eines Auftragevorgangs und zum Aufrechterhalten des Auftragevorgangs die Fördervorrichtung so anzusteuern, dass die Fördervorrichtung das viskose Medium innerhalb das Reservoirs mit dem genannten Überdruck zu beaufschlagen, und
- zum Stoppen oder Unterbrechen des Auftragevorgangs die Fördervorrichtung so anzusteuern, dass die Fördervorrichtung den Überdruck des viskosen Mediums innerhalb des Reservoirs soweit absenkt, dass der genannte Durchlasswiderstand des mindestens einen Düsenkanals das Ausströmen des viskosen Mediums durch den mindestens einen Düsenkanal stoppt. Dieses Absenken des Überdrucks kann beispielsweise durch einen Stoppen der Förderung des viskosen Mediums in das Reservoir durch die Fördervorrichtung erzielt werden, beispielsweise durch ein Aus- oder Inaktivschalten der Fördervorrichtung, oder durch ein Schließen eines steuerbaren Auslassventils der Fördervorrichtung. Insbesondere wird aber kein an dem mindestens einen Düsenkanal angeordneter Schließmechanismus zum Verschließen des mindestens einen Düsenkanals betätigt oder entsprechend angesteuert.

In einer besonderen Ausführungsform ist das System zum Durchführen des hier vorgeschlagenen Verfahrens zum Herstellen einer Mikrostruktur auf einer Bauteiloberfläche ausgebildet. Das System umfasst dann außerdem:
- eine Matrize mit einem Negativ der zu erzeugenden Mikrostruktur, wie oben beschrieben, wobei die Matrize und das Modul so angeordnet sind, dass das viskose Medium mittels des Moduls auf das Negativ der Matrize oder direkt auf die Bauteiloberfläche aufgetragen wird,
- eine über die Bauteiloberfläche abrollbare Andruckwalze zum Andrücken der Matrize auf die Bauteiloberfläche, wobei Andruckwalze und Matrize so angeordnet sind, dass beim Abrollen der Walze über die Bauteiloberfläche die Matrize in einer rollenden Bewegung zwischen Walze und Oberfläche gelangt, so dass das Negativ der Matrize der Oberfläche zugewandt ist.

Das System kann außerdem alle im Zusammenhang mit dem vorgeschlagenen Verfahren beschriebene Merkmale aufweisen. Außerdem kann das System als ein Werkzeug der in DE 103 46 124 B4 und WO 2005/030472 A1 vorgeschlagenen Art ausgestaltet sein und jedes der dort beschriebenen Merkmale aufweisen. Entsprechend kann das hier vorgeschlagene Verfahren und System so ausgestaltet sein, dass damit die Mikrostrukturierung doppelt gekrümmter Bauteiloberflächen, bevorzugt an Großstrukturen wie Flugzeugen, Schienenfahrzeugen, Schiffen, insbesondere deren Rümpfen, und/oder Windenergieanlagen, insbesondere deren Rotorblättern, ermöglicht ist.

Das System kann beispielsweise relativ zu der Oberfläche, auf die das viskose Medium aufgetragen werden soll, bewegt werden. Typischerweise ist diese Bewegung eine relative Verschiebung zwischen dem Modul und der Oberfläche, wobei typischerweise keine Rotation des Moduls um dessen Längsachse erfolgt (zumindest keine Rotation, die den Medienaustrag aus dem Reservoir beeinflusst). Dies kann beispielsweise manuell oder über einen eigenen Antrieb des Systems erfolgen, wobei das System beispielsweise angetriebene Räder umfassen kann. Das System kann als eine mobile Beschichtungsanlage ausgestaltet sein, die beispielsweise zur Applikation von Klebstoffen für Teppiche auf Baustellen oder zur Applikation von Farben und Lacken eingerichtet ist. Es ist auch möglich, dass das System mittels eines Roboterarms entlang der jeweiligen Oberfläche bewegt wird, insbesondere im Fall der bereits beschriebenen Herstellung von Mikrostrukturen auf Bauteiloberflächen, insbesondere bei der Riblet-Applikation. Das System kann aber auch stationär sein, so dass die Oberfläche, auf die das viskose Medium aufgetragen werden soll, relativ zu dem System, beispielsweise also relativ zu dem Auslassbereich des Moduls und/oder zu der oben beschriebenen Matrize, bewegt wird. Bei dem System kann es sich auch um eine stationäre Beschichtungsanlage für eine diskontinuierliche Fertigung, wie zum Beispiel um einen Deskcoater, handeln. Typischerweise weist das System eine Halterung für das Modul auf, mittels derer das Modul während des Medienauftrags bezüglich seiner Längsachse drehfest fixiert ist.

Bei dem hier vorgeschlagenen Verfahren zum Herstellen eines Moduls hier vorgeschlagener Art wird ein Kunststoff, der sich zur Verarbeitung in einem Spritzgussverfahren eignet, in fließfähigem Zustand in ein Formwerkzeug eingespritzt. Das Formwerkzeugs ist als Negativform des Moduls ausgestaltet und kann beispielsweise eine Matrize und einen Kern umfassen. Die Matrize, die ein- oder mehrteilig aufgebaut sein kann, weist einen Innenraum auf, der eine Negativform der äußeren Oberfläche des Moduls ist. Der Kern, der ebenfalls ein- oder mehrteilig aufgebaut sein kann, ist eine Negativform des Reservoirs des Moduls. Der Kern oder die Matrize weisen außerdem mindestens einen Zapfen oder Steg auf, welcher als Negativformen des mindestens einen Düsenkanals des Moduls ausgestaltet sind. Beispielsweise kann die Matrize derart ausgestaltet sein, dass sie auch einen Bereich mit einer Negativform der Rakelkante aufweist, sofern eine solche vorgesehen ist. Dann kann durch das Spritzgussverfahren gleichzeitig auch die Rakelkante hergestellt werden. Die Negativform der Rakelkante kann beispielsweise eine kanalförmige oder schlitzförmige Vertiefung auf einer inneren Oberfläche der Matrize ausgestaltet sein. Die Rakelkante ist dann also ein Teilbereich des Spritzgussteils, besteht also selbst aus dem gleichen Kunststoff wie der Rest des Spritzgussteils.

Im Folgenden wird die Erfindung anhand einiger spezieller Ausführungsbeispiele näher erläutert, von denen einige in den Figuren 1 bis 8 schematisch dargestellt sind. Es zeigt:
- Figur 1:: ein Modul hier vorgeschlagener Art in einer perspektivischen Ansicht,
- Figur 2:: eine Ansicht eines Querschnitts durch das in der Figur 1 gezeigte Modul entlang der in Figur 1 gezeigten Schnittlinie,
- Figur 3:: einen stark vergrößerten Teilbereich von Figur 2,
- Figur 4A:: eine Querschnittsfläche eines Düsenkanals mit länglicher Querschnittsfläche eines Moduls hier vorgeschlagener Art,
- Figur 4B:: einen Längsschnitt durch einen sich konisch verengenden Düsenkanal eines Moduls hier vorgeschlagener Art,
- Figur 4C:: einen Längsschnitt durch einen sich stufenförmig verengenden Düsenkanal eines Moduls hier vorgeschlagener Art,
- Figur 5:: das in Figur 1 gezeigte Modul in einer Seitenansicht,
- Figur 6A:: einen stark vergrößerten Teilbereich von Figur 5,
- Figur 6B:: der in Figur 6A gezeigte Teilbereich für eine zweireihige Anordnung der Düsenkanäle,
- Figur 7:: eine Seitenansicht eines Systems hier vorgeschlagener Art mit dem in Figuren 1 bis 3 gezeigten Modul und
- Figur 8:: eine Ansicht eines Querschnitts durch ein Formwerkzeugs hier vorgeschlagener Art zum Herstellen des in Figuren 1 bis 3 gezeigten Moduls.

In den Figuren bezeichnen wiederkehrende Bezugszeichen gleiche oder einander entsprechende Merkmale. Die Figuren stellen keine maßstabstreue Abbildungen dar, sondern dienen als vereinfachte, schematische Darstellungen lediglich Illustrationszwecken.

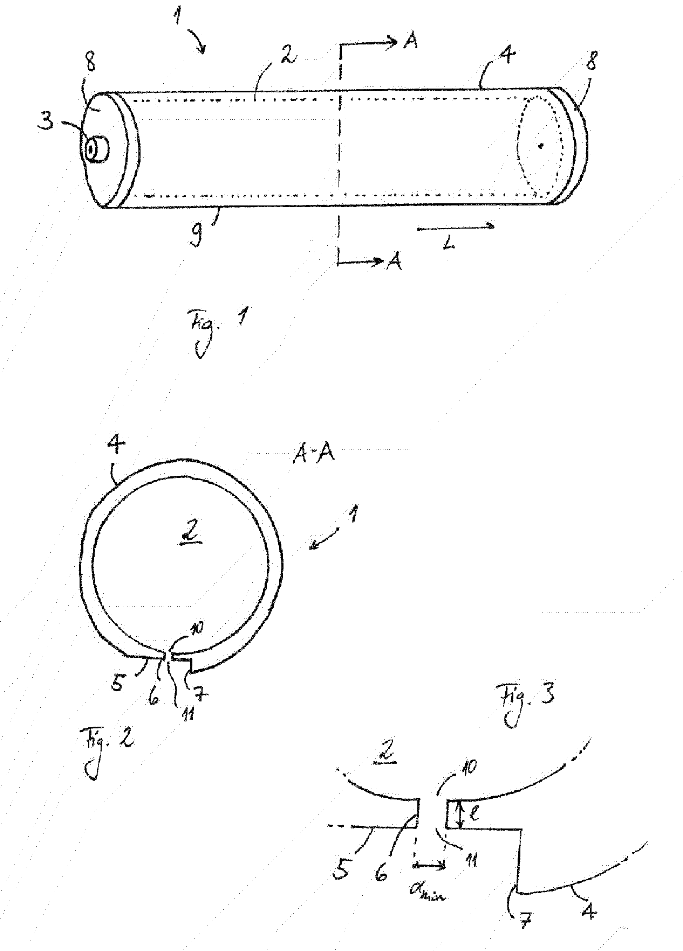

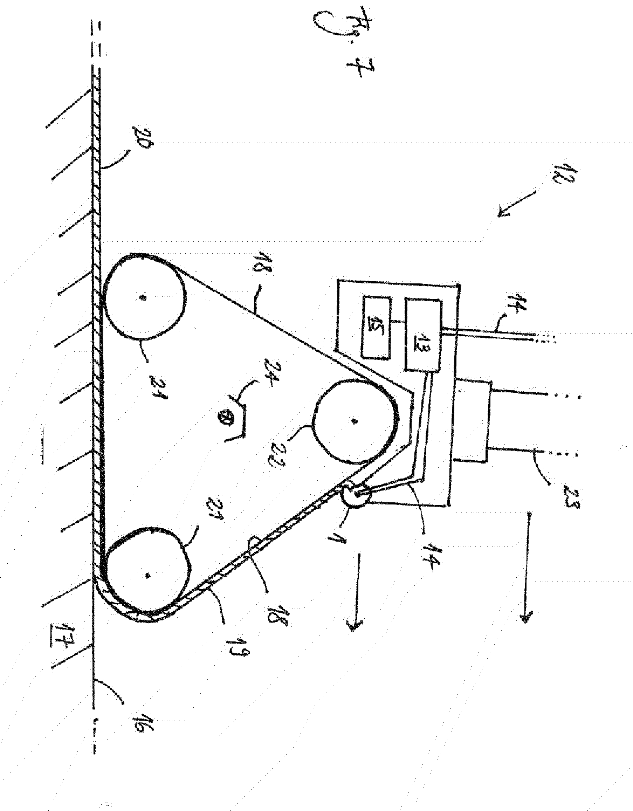

In Figur 1 ist eine perspektivische Ansicht eines Moduls 1 hier vorgeschlagener Art zum Auftragen eines viskosen Mediums auf eine Oberfläche gezeigt. Bei der Oberfläche kann es sich beispielsweise um eine Oberfläche eines Bauteils oder einer Matrize handeln, wie in Figur 7 gezeigt ist. Bei dem viskosen Medium kann es sich beispielsweise um einen aushärtbaren Lack handeln, wie etwa einen Dual-Cure-Lack zur Herstellung einer Riblet-Struktur auf einer Bauteiloberfläche, wie weiter unten näher beschrieben wird.

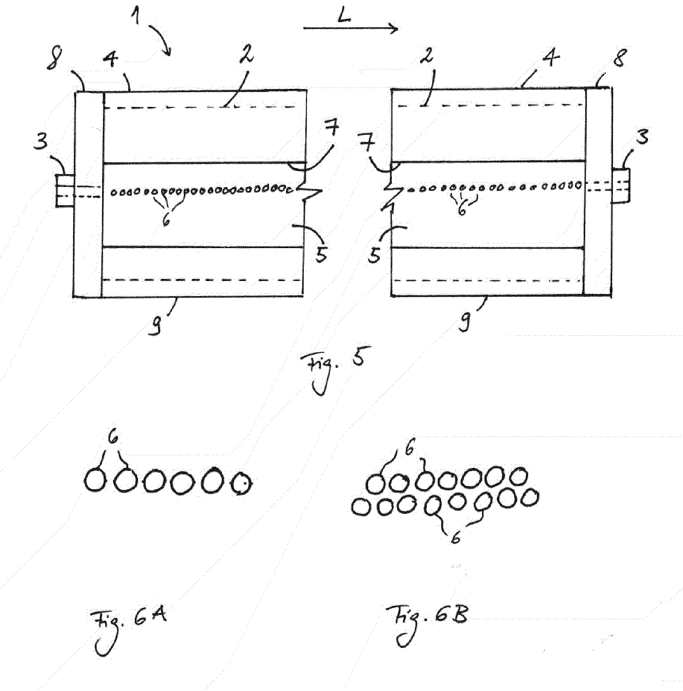

In Figur 1 ist mit einer gestrichelten Linie ein Reservoir 2 des Moduls 1 für das viskose Medium eingezeichnet. Das Modul 1 weist zwei Medienanschlüsse 3 zum Speisen des Reservoirs 2 mit dem viskosen Medium auf, welche an einander entgegengesetzten Enden des Reservoirs 2 angeordnet sind, siehe auch Figur 5.

Wie in dem in Figuren 2 und 3 gezeigten Querschnitt des Moduls 1 (die zugehörige Schnittlinie A-A ist in Figur 1 eingezeichnet) zu erkennen ist, ist das Reservoir 2 in diesem Beispiel als ein zylinderförmiger Hohlraum in dem Modul 1 ausgestaltet. Die Außenfläche 4 des Moduls 1 umfasst einen ebenen Auslassbereich 5 für das viskose Medium, der sich entlang einer Längsachse L des Reservoirs 2, siehe Figur 1, erstreckt. Das Modul 1 weist ferner eine Vielzahl von Düsenkanälen 6 auf, welche jeweils das Reservoir 2 mit dem Auslassbereich 5 fluidisch verbinden, siehe auch Figur 5. An den Auslassbereich 5 angrenzend ist eine Rakelkante 7 des Moduls 1 angeordnet.

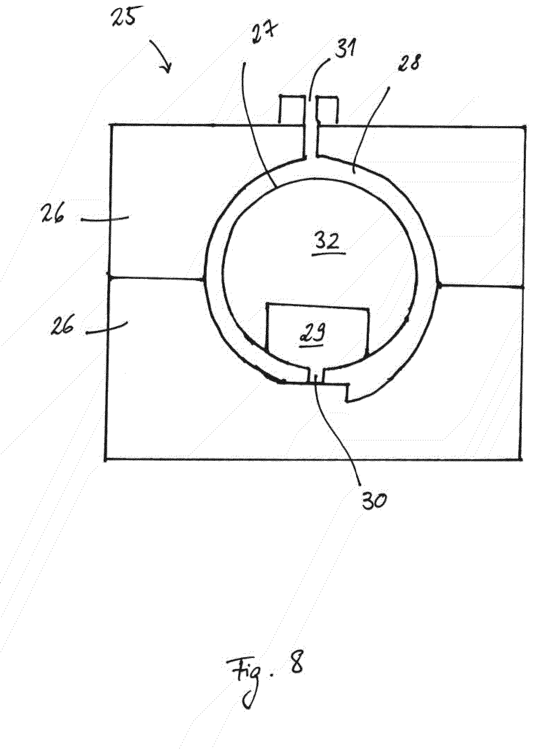

Das Modul 1 weist keinen Schließmechanismus und keine beweglichen Teile zum Verschließen oder Versperren der Düsenkanäle 6 auf. Wie weiter unten anhand Figur 8 beschreiben wird, handelt es sich bei dem Modul 1 um ein einfach und kostengünstig herstellbares Spritzgussteil, das als Einwegbauteil bestimmt ist. Im vorliegenden Beispiel besteht das Modul aus mehreren Modulsegmenten, die axial zusammengesetzt worden sind. Zwei Endkappen 8 schließen das Reservoir 2 endseitig ab und tragen die seitlichen Medienanschlüsse 3. Zwischen den beiden Endkappen 8 ist ein Zwischensegment 9 angeordnet, welches das Reservoir 2 seitlich umgrenzt und die Düsenkanäle 6 aufweist. Das Modul 2 könnte anstelle nur eines Zwischensegmentes 9 auch mehrere gleichartige und axial miteinander verbundene Zwischensegmente 9 aufweisen, um eine entsprechend größere Gesamtlänge des Moduls zu erzielen. Die Modulsegmente 8, 9 sind durch Verbindungselemente miteinander verbunden (hier nicht dargestellt), beispielsweise durch in axialer Richtung wirkende Klemm- oder Spannelemente.

Der Durchlasswiderstand der Düsenkanälen 6 für das viskose Medium hängt besonders stark von einem kleinsten Durchmesser dₘᵢₙ der Düsenkanäle 6 ab und auch von deren Länge I. Im vorliegenden Beispiel weisen die Düsenkanäle 6 über ihre gesamte Länge I hinweg eine gleichgroße, kreisrunde Querschnittsfläche auf, so dass der kleinste Durchmesser dₘᵢₙ dem gewöhnlichen Durchmesser des Düsenkanals 6 entspricht, siehe Figur 3. Im vorliegenden Beispiel betragen die kleinsten Durchmesser dₘᵢₙ beispielsweise 0,8 mm und die Längen I der Düsenkanäle beispielsweise 1 mm. Jeder der Düsenkanäle 6 verläuft von einer Einlassöffnung 10 des jeweiligen Düsenkanals 6, mit der der Düsenkanal 6 im Reservoir 2 mündet, bis zu einer Auslassöffnung 11 des jeweiligen Düsenkanals 6, mit der der Düsenkanal 6 im Auslassbereich 5 auf der Außenfläche 4 des Moduls 1 mündet. Die Düsenkanäle 6 weisen jeweils eine von dem Reservoir 2 bis zum Auslassbereich 5 gemessene Kanallänge I auf. In diesem Beispiel betragen die Kanallängen I jeweils 1 mm.

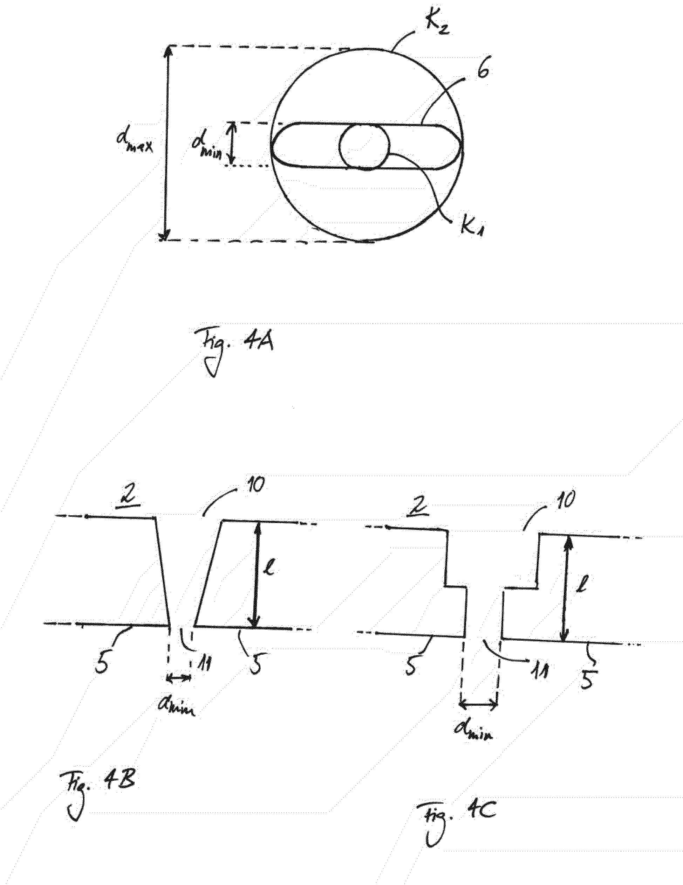

Wie in Figur 4A gezeigt ist, können die Düsenkanäle 6 anstelle eines kreisrunden Querschnitts auch beispielsweise eine langgestreckte, in diesem Fall eine ovale, Querschnittsfläche aufweisen. Hier beträgt der kleinste Durchmesser dₘᵢₙ beispielsweise 0,5 mm und der größte Durchmesser dₘₐₓ 2 mm, welche als Durchmesser des größtmöglichen einbeschriebenen Kreises K₁ bzw. als Durchmesser des kleinstmöglichen umbeschriebenen Kreises K₂ definiert sind.

Wie in Figuren 4B und 4C gezeigt ist, ist es außerdem möglich, dass die Düsenkanäle 6 Querschnittsflächen aufweisen, die sich entlang ihres Kanalverlaufs von dem Reservoir 2 zum Auslassbereich 5 ändern und sich entlang dieses Verlaufs beispielweise verengen oder aufweiten. Beispielsweise verengt sich der in Figur 4B gezeigte Düsenkanal 6 zur Auslassöffnung 11 hin konisch und weist dort einen kleinsten Durchmesser dₘᵢₙ von 0,5 mm auf. Der in Figur 4C gezeigte Düsenkanal 6 verengt sich zur Auslassöffnung 11 hin stufenförmig und weist dort einen kleinsten Durchmesser dₘᵢₙ von 0,6 mm auf.

In Figur 5 ist das in Figur 1 gezeigte Modul 1 noch einmal in einer Seitenansicht gezeigt, in der auch die Düsenkanäle 6 im Auslassbereich 5 und die Rakelkante 7 zu erkennen sind. Zu erkennen ist außerdem, dass die Düsenkanäle 6 in einer Reihe angeordnet sind, die parallel zur Rakelkante 7 und zur Längsachse L des Reservoirs 2 verläuft. Der Abstand zwischen zwei benachbarten Düsenkanälen 6 (gemessen entlang der Längsachse L) beträgt in diesem Beispiel 0,2 mm. Dies ist vergrößert auch in Figur 6A dargestellt. In Figur 6B ist eine alternative Anordnung der Düsenkanäle 6 gezeigt, in der die Düsenkanäle 6 in zwei parallel zur Längsachse L und zueinander axial versetzt verlaufenden Reihen angeordnet sind (Verbindungslinien zwischen den Düsenkanälen 6 würden ein Zickzack-Muster bilden). Auf diese Weise lässt sich beispielsweise bei gleichem axialen Abstand zwischen den Düsenkanälen 6 eine doppelt so große Anzahl von Düsenkanälen erzielen, so dass bei gleichem Überdruck ein doppelt so großer gesamter Massenstrom des viskosen Mediums aus dem Reservoir 2 erzeugt werden kann. Beispielsweise hat das Reservoir 2 eine Länge (gemessen entlang der Längsachse L) von 50 cm. Die Düsenkanäle 6 sind entlang der gesamten Längsausdehnung des Reservoirs 2 angeordnet, so dass das Modul 1 im Fall der einreihigen Anordnung gemäß Figur 6A insgesamt 625 Düsenkanäle 6 aufweist und im Fall der zweireihigen Anordnung gemäß Figur 6B insgesamt 1250 Düsenkanäle 6.

Das Modul 1 ist ausreichend stabil ausgestaltet, um dem Überdruck, mit dem das viskose Medium im Reservoir 2 beaufschlagt wird, um es durch die Düsenkanäle 6 hindurch aus dem Reservoir 2 auszulassen, standzuhalten. Typischerweise wird, je nach Viskosität des viskosen Mediums und der Größe des Druckabfalls in den Düsenkanälen 6, ein Überdruck von mehr als 2 Bar angewendet, typischerweise liegt der Überdruck in einem Bereich zwischen 2 Bar und 30 bar. Das verwendete viskose Medium weist typischerweise eine (dynamische) Viskosität von 0,5 Pa·s oder mehr auf und kann beispielsweise als eine Paste vorliegen. In der Regel beträgt die Viskosität aber nicht mehr als 150 Pa·s.

Figur 7 zeigt stark schematisiert und in einer seitlichen Ansicht ein spezielles Beispiel eines System 12 hier vorgeschlagener Art zum Herstellen einer Mikrostruktur auf einer Oberfläche 16 eines Bauteils 17, beispielsweise auf einer Tragfläche oder einem Rumpf eines Flugzeugs. Das System 12 umfasst ein Modul 1 hier vorgeschlagener Art, wie zum Beispiel das in Figur 1 gezeigt Modul 1, sowie eine steuerbare Fördervorrichtung 13, die dazu eingerichtet ist, das viskose Medium über zwei Medienleitungen 14 (nur eine ist in Figur 7 gezeigt), die mit den Medienanschlüssen 3 des Moduls 1 verbunden sind, in das Reservoir 2 des Moduls 1 zu fördern und dort mit einem ausreichend hohen Überdruck zu beaufschlagen, um es durch die Düsenkanäle 6 aus dem Reservoir 2 des Moduls 1 auszutragen. Das System 12 umfasst keine an den Düsenkanälen 6 angeordneten bewegbaren Schließelemente, welche dazu eingerichtet wären, die Düsenkanäle zu öffnen und zu verschließen.

Eine Steuereinheit 15 des Systems 12 ist dazu eingerichtet
- zum Starten eines Auftragevorgangs und zum Aufrechterhalten des Auftragevorgangs die Fördervorrichtung 13 so anzusteuern, dass die Fördervorrichtung 13 das viskose Medium innerhalb das Reservoirs 2 mit dem genannten Überdruck beaufschlagt, und
- zum Stoppen oder Unterbrechen des Auftragevorgangs die Fördervorrichtung 13 so anzusteuern, dass die Fördervorrichtung 13 durch ein Stoppen der Förderung den Überdruck des viskosen Mediums innerhalb des Reservoirs 2 soweit absenkt, dass der Durchlasswiderstand der Düsenkanäle 6 das Ausströmen des viskosen Mediums durch die Düsenkanäle 6 stoppt.

Das System 12 umfasst außerdem eine flexible und als ein Endlosband ausgestaltete Matrize 18 mit einem Negativ der zu erzeugenden Mikrostruktur. Die Matrize 18 und das Modul 1 sind so angeordnet, dass das viskose Medium, in Figur 7 gezeigt und mit dem Bezugszeichen 19 versehen, mittels des Moduls 1 auf das Negativ der Matrize 18 aufgetragen und dort mittels der Rakelkante 7 vergleichmäßigt und in Vertiefungen des Negativs eingebracht wird. Das System 12 umfasst ferner zwei über die Oberfläche 16 des Bauteils 17 abrollbare Andruckwalzen 21 zum Andrücken der Matrize 18 auf die Bauteiloberfläche 16, wobei die Andruckwalzen 21 und die Matrize 18 so angeordnet sind, dass beim Abrollen der Andruckwalzen 21 über die Bauteiloberfläche 16 die Matrize 18 in einer rollenden Bewegung zwischen Andruckwalzen 21 und Oberfläche 16 gelangt, so dass das Negativ der Matrize 18 der Oberfläche 16 zugewandt ist. Ferner umfasst das System 12 eine Umlenkwalze 22, die angeordnet ist, die Matrize 18 umzulenken und zu spannen. Um das System 12 über die Oberfläche 16 des Bauteils 17 zu verfahren und die Andruckwalzen 21 an die Oberfläche 16 anzudrücken und über sie abzurollen (in Richtung der in Figur 7 eingezeichneten Pfeile), ist das System 12 mit einem entsprechend eingerichteten Roboterarm 23 verbunden.

Mittels des Systems 12 kann somit auf der Oberfläche 16 des Bauteils 17 die Mikrostruktur durch Abformen des Negativs der Matrize 18 erzeugt werden. Dabei wird das viskose Medium 19 mittels des Moduls 1 auf das Negativ der Matrize 18 aufgetragen und mittels der Matrize 18 durch die oben beschriebene rollende Bewegung anschließend auf die Bauteiloberfläche 16 aufgebracht. Dabei wird auf der Bauteiloberfläche 16 eine Schicht 20 des viskosen Mediums 19 erzeugt. Dadurch, dass die Matrize mit dem Negativ auf die Bauteiloberfläche 16 aufgedrückt und abgerollt wird, wird mittels des Negativs der Matrize 18 die zu erzeugende Mikrostruktur auf die Schicht 20 durch Abformen des Negativs übertragen, während sich die Schicht 20 zwischen der Bauteiloberfläche 16 und dem Negativ der Matrize 18 befindet. Außerdem wird das viskose Medium 19 in der Schicht 20, noch während diese sich zwischen der Matrize 18 und der Bauteiloberfläche 16 befindet, mittels einer Vorrichtung 24 zum Beschleunigen des Aushärtens verwendet werden, welche zum Beispiel eine UV-Strahlungsquelle und eine Wärmequelle aufweisen kann, welche durch die hierfür durchlässige Matrize 18 hindurch auf die Schicht 20 einwirkt. Bei dem viskosen Medium 19 kann es sich beispielsweise um Dual-Cure-Lack handeln. Weitere Details hierzu können der DE 103 46 124 B4 und der WO 2005/030472 A1 entnommen werden.

Bei der Mikrostruktur handelt es sich beispielsweise um eine Riblet-Struktur mit rippenartigen Erhöhungen, deren Höhen und Abständen zueinander beispielsweise zwischen 50 um bis 0,5 um betragen.

In Figur 8 ist ein Querschnitt eines Formwerkzeugs 25 gezeigt, dass dazu ausgebildet ist, das in Figur 1 gezeigte Modul 1 mittels eines Spritzgussverfahrens herzustellen. Das Formwerkzeugs 25 ist als Negativform des Moduls 1 ausgestaltet und umfasst eine zweiteilige Matrize 26 und einen zweiteiligen Kern 27. Die Matrize 26 weist einen Innenraum 28 auf, der eine Negativform der Außenfläche 4 des Moduls 1 ist. Der Kern 27 ist eine Negativform des Reservoirs 2 des Moduls 1. Ein erster Teil 29 des Kerns 27 weist eine Vielzahl von Zapfen 30 auf, welche Negativformen der Düsenkanäle 6 des Moduls 1 sind. Bei der Herstellung des Moduls 1 wird ein für das Spritzgießen geeigneter Kunststoff in fließfähigem Zustand durch einen Einlasskanal 31 des zusammengesetzten Formwerkzeugs 25 in den Innenraum 28 der Matrize 26 eingespeist. Nach Aushärten des Kunststoffs in dem Formwerkzeug 25 kann zunächst ein zweiter Teil 32 des Kerns 27 aus dem Reservoir 2 des ausgehärteten Moduls 1 herausbewegt werden. Anschließend kann durch Ausnutzung des so entstandenen Freiraums auch der erste Teil 29 des Kerns 27 aus dem Reservoir 2 des ausgehärteten Moduls 1 heraus bewegt werden.

### Bezugszeichenliste:

1 Modul
2 Reservoir
3 Medienanschluss
4 Außenfläche
5 Auslassbereich
6 Düsenkanal
7 Rakelkante
8 Endkappe
9 Zwischensegment
10 Einlassöffnung
11 Auslassöffnung
12 System
13 Fördervorrichtung
14 Medienleitung
15 Steuereinheit
16 Oberfläche
17 Bauteil
18 Matrize
19 viskoses Medium
20 Schicht
21 Andruckwalze
22 Umlenkwalze
23 Roboterarm
24 Vorrichtung zum Beschleunigen des Aushärtens des viskosen Mediums
25 Formwerkzeug
26 Matrize des Formwerkzeugs
27 Kern des Formwerkzeugs
28 Innenraum
29 erster Teil des Kerns
30 Zapfen
31 Einlasskanal
32 zweiter Teil des Kerns
L Längsachse des Moduls
dₘᵢₙ kleinster Durchmesser
dₘₐₓ größter Durchmesser
I Kanallänge
K₁ einbeschriebener Kreis
K₂ umbeschriebener Kreis

## Patentansprüche

1. Modul (1) zum Auftragen eines viskosen Mediums (19), insbesondere eines Klebstoffs oder eines Lacks, auf eine Oberfläche (16), wobei das Modul (1) ein mit dem viskosen Medium (19) speisbares Reservoir (2) aufweist, wobei eine Außenfläche (4) des Moduls (1) einen Auslassbereich (5) für das viskose Medium (19) umfasst, wobei das Modul (1) mindestens einen Düsenkanal (6) aufweist, welcher das Reservoir (2) mit dem Auslassbereich (5) fluidisch verbindet, wobei ein kleinster Durchmesser (dₘᵢₙ) des mindestens einen Düsenkanals (6) kleiner als 0,8 mm ist und wobei das Modul (1) keine beweglichen Teile zum Verschließen des mindestens einen Düsenkanals (6) aufweist, wobei das Modul eine Längsachse (L) und mehrere Modulsegmente umfasst, wobei die Modulsegmente zwei Endsegmente (8) und mindestens ein zwischen den Endsegmenten (8) angeordnetes Zwischensegment (9) umfassen, welches das Reservoir (2) seitlich umgrenzt und den mindestens einen Düsenkanal (6) aufweist, wobei die beiden Endsegmente (8) das Reservoir (2) endseitig abschließen,
**dadurch gekennzeichnet,**
**dass** das mindestens eine Zwischensegment (9) rohrförmig ist und einen axialen Abschnitt des Moduls (2) bildet.

2. Modul (1) nach Anspruch 1, **dadurch gekennzeichnet, dass** die Modulsegmente axial zu dem Modul (1) zusammengesetzt sind.

3. Modul (1) nach Anspruch 1 oder 2, **dadurch gekennzeichnet, dass** die Endsegmente (8) jeweils einen Medienanschluss (3) zum Speisen des Reservoirs (2) mit dem viskosen Medium (19) aufweisen.

4. Modul (1) nach einem der vorangehenden Ansprüche, **dadurch gekennzeichnet, dass** das Reservoir (2) ein im Wesentlichen zylindrisch geformter Hohlraum des Moduls (1) ist.

5. Modul (1) nach einem der vorangehenden Ansprüche, **dadurch gekennzeichnet, dass** das mindestens eine Zwischensegment (9) mehrere gleichartige ausgestaltete und axial miteinander verbundene Zwischensegmente (9) umfasst.

6. Modul (1) nach einem der vorangehenden Ansprüche, **dadurch gekennzeichnet, dass** das Modul (1) Verbindungselemente umfasst, welche die Modulsegmente miteinander verbinden.

7. Modul (1) nach Anspruch 6, **dadurch gekennzeichnet, dass** die Verbindungselemente Klemm- oder Spannelemente sind, die in axialer Richtung wirken.

8. Modul (1) nach einem der vorangehenden Ansprüche, **dadurch gekennzeichnet, dass** der mindestens eine Düsenkanal (6) mehrere Düsenkanäle (6) umfasst, die in mindestens einer Reihe angeordnet sind, wobei die mindestens eine Reihe der Düsenkanäle (6) entlang einer Längsausdehnung des Reservoirs (2) verläuft, wobei eine Längsausdehnung des Reservoirs vorzugsweise zwischen 50 cm und 150 cm beträgt.

9. Modul (1) nach einem der vorangehenden Ansprüche, **dadurch gekennzeichnet, dass** der mindestens eine Düsenkanal (6) eine von dem Reservoir (2) bis zum Auslassbereich (5) gemessene Kanallänge (I) aufweist, wobei die Kanallänge (I) mindestens 0,8 mm beträgt und/oder dass ein größter Durchmesser (dₘₐₓ) des Düsenkanals (6) kleiner als 3 mm ist und/oder dass sich der mindestens eine Düsenkanal (6) zum Auslassbereich (5) hin verjüngt, wobei der mindestens eine Düsenkanal (6) bevorzugt stufenförmig oder konisch ausgestaltet ist.

10. Modul (1) nach einem der vorangehenden Ansprüche, **dadurch gekennzeichnet, dass** das Moduls (1) ausgestaltet ist, einer Druckbeaufschlagung des viskosen Mediums (19) im Reservoir (2) von 1,5 Bar oder mehr standzuhalten.

11. Modul (1) nach einem der vorangehenden Ansprüche, **dadurch gekennzeichnet, dass** das Modul (1) eine entlang des Auslassbereichs verlaufende Rakelkante (7) zum Verteilen des viskosen Mediums (19) auf der Oberfläche (16) aufweist, wobei die Rakelkante (7) vorzugsweise auf der Außenfläche (4) des Moduls (1) angeordnet ist.

12. Modul (1) nach einem der vorangehenden Ansprüche, **dadurch gekennzeichnet, dass** das Modul (1) aus einem Kunststoff gefertigt ist.

13. Verfahren zum Herstellen eines Moduls (1) nach Anspruch 12, **dadurch gekennzeichnet, dass** der Kunststoff in fließfähigem Zustand in ein Formwerkzeug (25) eingespritzt wird, wobei das Formwerkzeug (25) als eine Negativform des Moduls (1) ausgestaltet ist, wobei das Formwerkzeug (25) ein Matrizenteil (26) und einen Kern (27) umfasst, wobei das Matrizenteil (26) einen Innenraum (28) aufweist, der eine Negativform der Außenfläche (4) des Moduls (1) ist, wobei der Kern (27) eine Negativform des Reservoirs (2) des Moduls (1) ist, wobei das Matrizenteil (26) oder der Kern (27) mindestens einen Zapfen (30) aufweist, der als eine Negativform des mindestens einen Düsenkanals (6) ausgestaltet ist.

14. Verfahren zum Herstellen eines Moduls (1) nach einem der Ansprüche 1 bis 12, **dadurch gekennzeichnet, dass** die Modulsegmente in axialer Richtung zusammengesetzt und miteinander verbunden werden.

## Claims

1. A module (1) for depositing a viscous medium (19), in particular an adhesive or lacquer, onto a surface (16), wherein the module (1) comprises a reservoir (2) which can be fed with the viscous medium (19), an outer surface (4) of the module (1) comprising an outlet region (5) for the viscous medium (19), wherein the module (1) comprises at least one nozzle channel (6) which fluidically connects the reservoir (2) to the outlet region (5), a smallest diameter (dₘᵢₙ) of the at least one nozzle channel (6) being smaller than 0.8 mm and wherein the module (1) comprises no moving parts for the closure of the at least one nozzle channel (6), the module comprising a longitudinal axis (L) and a plurality of module segments, wherein the module segments comprise two end segments (8) and at least one intermediate segment (9) arranged between the end segments (8), which intermediate segment laterally encloses the reservoir (2) und comprises the at least one nozzle channel (6), wherein the two end segments (8) close off the ends of the reservoir (2),
**characterized in that**
the at least one intermediate segment (9) is tubular and forms an axial section of the module (2).

2. The module (1) according to claim 1, **characterized in that** the module segments are axially assembled to form the module (1).

3. The module (1) according to claim 1 or 2, **characterized in that** the end segments (8) each have a media port (3) for feeding the reservoir (2) with the viscous medium (19).

4. The module (1) according to one of the preceding claims, **characterized in that** the reservoir (2) is a cavity of the module (1) which is shaped in an essentially cylindrical manner.

5. The module (1) according to any one of the preceding claims, **characterized in that** the at least one intermediate segment (9) comprises a plurality of similarly configured intermediate segments (9) axially connected to one another.

6. The module (1) according to one of the preceding claims, **characterized in that** the module (1) comprises connecting elements which connect the module segments to one another.

7. The module (1) according to claim 6, **characterized in that** the connecting elements are clamping or tensioning elements acting in the axial direction.

8. The module (1) according to one of the preceding claims, **characterized in that** the at least one nozzle channel (6) includes several nozzle channels (6) which are arranged in at least one row, wherein the at least one row of nozzle channels (6) runs along a longitudinal extension of the reservoir (2), a longitudinal extent of the reservoir preferably being between 50 cm and 150 cm.

9. The module (1) according to one of the preceding claims, **characterized in that** the at least one nozzle channel (6) has a channel length (I) which is measured from the reservoir (2) up to the outlet region (5), wherein the channel length (I) is at least 0.8 mm and/or that a largest diameter (dₘₐₓ) of the nozzle channel (6) is smaller than 3 mm and/or that the at least one nozzle channel (6) tapers towards the outlet region (5), wherein the at least one nozzle channel is preferably designed in a step-like or conical manner.

10. The module (1) according to one of the preceding claims, **characterized in that** the module (1) is designed to withstand a pressure subjection of the viscous medium (19) in the reservoir (2) of 1.5 bar or more.

11. The module (1) according to one of the preceding claims, **characterized in that** the module (1) has a doctor edge (7) running along the outlet region for distributing the viscous medium (19) on the surface (16), the doctor edge (7) preferably being arranged on the outer surface (4) of the module (1).

12. The module (1) according to one of the preceding claims, **characterized in that** the module (1) is manufactured of plastic.

13. A method for producing a module (1) according to claim 12, **characterized in that** the plastic is injected in a flowable state into a mold (25), the mold (25) being designed as a negative mold of the module (1), the mold (25) comprising a die part (26) and a core (27), the die part (26) having an inner space (28) which is a negative mold of the outer surface (4) of the module (1), the core (27) being a negative mold of the reservoir (2) of the module (1), the die part (26) or the core (27) having at least one pin (30) which is designed as a negative mold of the at least one nozzle channel (6).

14. A method for producing a module (1) according to one of claims 1 to 12, **characterized in that** the module segments are assembled in the axial direction and connected to one another.

## Revendications

1. Module (1) pour l'application d'un milieu visqueux (19), en particulier d'un adhésif ou d'un vernis, sur une surface (16), dans lequel le module (1) présente un réservoir (2) pouvant être alimenté avec le milieu visqueux (19), dans lequel une surface extérieure (4) du module (1) comprend une zone de sortie (5) pour le milieu visqueux (19), dans lequel le module (1) présente au moins un canal de buse (6) qui relie de manière fluidique le réservoir (2) à la zone de sortie (5), dans lequel le diamètre le plus petit (dₘᵢₙ) du au moins un canal de buse (6) est inférieur à 0,8 mm, et dans lequel le module (1) ne présente aucune partie mobile pour fermer le au moins un canal de buse (6), dans lequel le module comprend un axe longitudinal (L) et plusieurs segments de module, dans lequel les segments de module comprennent deux segments d'extrémité (8) et au moins un segment intermédiaire (9) agencé entre les segments d'extrémité (8), qui délimite latéralement le réservoir (2) et présente le au moins un canal de buse (6), dans lequel les deux segments d'extrémité (8) du réservoir (2) ferment le côté extrémité,
**caractérisé en ce que**
le au moins un segment intermédiaire (9) est de forme tubulaire et forme une section axiale du module (2).

2. Module (1) selon la revendication 1, **caractérisé en ce que** les segments de module sont assemblés axialement pour former le module (1).

3. Module (1) selon la revendication 1 ou 2, **caractérisé en ce que** les segments d'extrémité (8) présentent respectivement un raccord de fluide (3) pour alimenter le réservoir (2) en fluide visqueux (19).

4. Module (1) selon l'une quelconque des revendications précédentes, **caractérisé en ce que** le réservoir (2) est une cavité de forme sensiblement cylindrique du module (1).

5. Module (1) selon l'une quelconque des revendications précédentes, **caractérisé en ce que** le au moins un segment intermédiaire (9) comprend plusieurs segments intermédiaires (9) de même conception et reliés axialement les uns aux autres.

6. Module (1) selon l'une quelconque des revendications précédentes, **caractérisé en ce que** le module (1) comprend des éléments de liaison qui relient les segments de module les uns aux autres.

7. Module (1) selon la revendication 6, **caractérisé en ce que** les éléments de liaison sont des éléments de blocage ou de serrage qui agissent dans la direction axiale.

8. Module (1) selon l'une quelconque des revendications précédentes, **caractérisé en ce que** le au moins un canal de buse (6) comprend plusieurs canaux de buse (6) qui sont agencés en au moins une rangée, dans lequel la au moins une rangée des canaux de buse (6) s'étend le long d'une étendue longitudinale du réservoir (2), dans lequel une étendue longitudinale du réservoir est comprise de préférence entre 50 cm et 150 cm.

9. Module (1) selon l'une quelconque des revendications précédentes, **caractérisé en ce que** le au moins un canal de buse (6) présente une longueur de canal (I) mesurée du réservoir (2) jusqu'à la zone de sortie (5), dans lequel la longueur de canal (I) est d'au moins 0,8 mm et/ou **en ce que** le diamètre le plus grand (dₘₐₓ) du canal de buse (6) est inférieur à 3 mm et/ou **en ce que** le au moins un canal de buse (6) se rétrécit vers la zone de sortie (5), dans lequel le au moins un canal de buse est de préférence conçu de manière étagée ou conique.

10. Module (1) selon l'une quelconque des revendications précédentes, **caractérisé en ce que** le module (1) est conçu pour résister à une mise sous pression du milieu visqueux (19) dans le réservoir (2) de 1,5 bar ou plus.

11. Module (1) selon l'une quelconque des revendications précédentes, **caractérisé en ce que** le module (1) présente un bord de raclage (7) s'étendant le long de la zone de sortie pour répartir le milieu visqueux (19) sur la surface (16), dans lequel le bord de raclage (7) est agencé de préférence sur la surface extérieure (4) du module (1).

12. Module (1) selon l'une quelconque des revendications précédentes, **caractérisé en ce que** le module (1) est réalisé en matière plastique.

13. Procédé de fabrication d'un module (1) selon la revendication 12, **caractérisé en ce que** la matière plastique est injectée à l'état fluide dans un outil de moulage (25), dans lequel l'outil de moulage (25) est conçu sous la forme d'une forme négative du module (1), dans lequel l'outil de moulage (25) comprend une partie de matrice (26) et un noyau (27), dans lequel la partie de matrice (26) présente un espace intérieur (28) qui est une forme négative de la surface extérieure (4) du module (1), dans lequel le noyau (27) est une forme négative du réservoir (2) du module (1), dans lequel la partie de matrice (26) ou le noyau (27) présente au moins un ergot (30) qui est conçu sous la forme d'une forme négative du au moins un canal de buse (6).

14. Procédé de fabrication d'un module (1) selon l'une des revendications 1 à 12, **caractérisé en ce que** les segments de module sont assemblés et reliés les uns aux autres dans la direction axiale.
